# EUROPÄISCHE PATENTSCHRIFT

(11) **EP 0 505 786 B1**
(45) Veröffentlichungstag und Bekanntmachung des Hinweises auf die Patenterteilung: **24.08.1994**
(21) Anmeldenummer: 92103821.2
(22) Anmeldetag: 06.03.1992
(51) Int. Cl.: F16F 15/00, G12B 5/00

(54) **Schwingungsdämpfende Halterung**
Vibration-damping mount
Support amortissant de vibration

(30) Priorität: 28.03.1991 DE 4110250
(43) Veröffentlichungstag der Anmeldung: 30.09.1992
(73) Patentinhaber: SPECTROSPIN AG, CH-8117 Fällanden (CH)
(72) Erfinder: Jeker, René, Dr., CH-8634 Hombrechtikon (CH); Reiser, Rudolf, CH-8700 Küsnacht (CH)
(74) Vertreter: KOHLER SCHMID + PARTNER

(56) Entgegenhaltungen:
- EP-A- 0 103 188
- DE-A- 3 143 881
- DE-A- 3 917 408
- US-A- 4 676 473

## Beschreibung

Die Erfindung betrifft eine schwingungsdämpfende Halterung zum Halten vibrationsempfindlicher Geräte, insbesondere in Verbindung mit Kryostaten, mit einer Dämpfungsvorrichtung, einer tragenden Struktur, Stoßdämpfungselementen und Höhenadaptern.

Aus dem der Öftentlichkeit vor dem Anmeldetag der vorliegenden Anmeldung zugänglichen Firmenprospekt Breadbords - optische Tische -Schwingungsdämpfer - Sensoren der Firma MICROPLAN Schwingungstechnik, 6690 St. Wendel, 1987 ist ein optischer Tisch zur Schwingungsdämpfung gemäß Oberbegriff des Anspruchs 1 bekannt. Die Tischplatte besteht aus zwei waagrechten Stahlplatten, die durch senkrecht stehende Stahl-Honigwaben miteinander verbunden sind. Zur Dämpfung der Ausbreitung von Schwingungen innerhalb der Tischplatte werden die Hohlräume mit einem Polerschaum gefüllt. Beim sog. Mylon-Tisch wird in die Stahl-Honigwaben stattdessen ein Quarz-Sand-Gemisch eingefüllt und verdichtet. Die Tischplatte ruht auf vier mit Stoßdämpfungselementen und ggf. Höhenadaptern ausgestatteten Füßen.

Soll ein vorhandener Tisch durch den bekannten optischen Tisch ersetzt werden, so muß beispielsweise eine auf dem vorhandenen Tisch aufgebaute optische Meßanordnung vollständig abgebaut sowie Meß- und Versorgungsleitungen abgeklemmt werden. Nach dem Aufstellen des bekannten optischen Tischs muß die optische Meßanordnung neu aufgebaut und justiert sowie die Leitungen wieder miteinander verbunden werden. Dies verursacht erheblichen Aufwand.

Auch bei bekannten Stativen zum Halten eines in einem Kryostaten befindlichen supraleitenden Magneten eines NMR-Spektrometers ist es nicht möglich, ein vorhandenes Stativ, das einen im Einsatz befindlichen Kryostaten hält, durch ein andereds Stativ zu ersetzen, ohne den Kryostaten mit dem supraleitenden Magneten zu entfernen oder zumindest dessen Lage zu verändern. Wird die Lage eines in einem Kryostaten befindlichen supraleitenden Magneten eines NMR-Spektrometers verändert, so ist eine aufwendige und mühsame Neujustierung erforderlich, die mehrere Tage beansprucht.

Aufgabe der Erfindung ist es, eine schwingungsdämpfende Halterung vorzusehen, die aufgestellt werden kann, ohne die Lage eines mittels eines herkömmlichen Stativs gehaltenen Geräts zu verändern, so daß das herkömmliche Stativ ohne großen Aufwand ersetzt werden kann.

Diese Aufgabe wird erfindungsgemäß durch die Merkmale des Anspruchs 1 gelöst. Die Erfindung bezieht sich gemäß Anspruch 13 auch auf eine Anordnung eines vibrationsempfindlichen Gerätes mit einer schwingungsdämpfenden Halterung nach Anspruch 1. Dadurch ergibt sich eine stabile Anordnung, das zu haltende Gerät neigt nicht zum Kippen, selbst wenn es sich in Schräglage befindet.

Dadurch kann die schwingungsdämpfende Halterung um ein vorhandenes Stativ herum aufgestellt werden. Beim Aufstellen der erfindungsgemäßen schwingungsdämpfenden Halterung zum Ersetzen eines vorhandenen Stativs kann ein gehaltenes Gerät in seiner Lage belassen, Anschlüße, z. B. Kabel, Kühlwasserleitungen oder Flüßig-Gas-Leitungen eines in Betrieb befindlichen Geräts können verbleiben. Es werden keine Hilfsmittel wie Krane oder Hebezeuge benötigt, um das Gerät zu halten, während die schwingungsdämpfende Halterung aufgestellt wird. Als Stoßdämpfungselemente eignen sich insbesondere pneumatische oder piezoelektrische Dämpfungselemente. Durch den gleichen Aufbau der Segmente wird eine gleichmäßige Lastverteilung erreicht. Das Ersetzen eines vorhandenen Stativs, das einen in einem Kryostaten befindlichen supraleitenden Magneten einer NMR-Spectrometers hält, verkürzt sich durch die Verwendung der erfindungsgemäßen schwingungsdämpfenden Halterung von mehreren Tagen auf wenige Stunden. Die aufwendige und mühsame Neujustierung der supraleitenden Magneten entfällt.

Die Erfindung kann dahingehend weitergebildet sein, daß die schwingungsdämpfende Halterung drei Segmente aufweist. Dies hat den Vorteil, daß die Abstützung der schwingungsdämpfenden Halterung statisch bestimmt ist.

Bei einer Ausführungsform der Erfindung weist die Dämpfungsvorrichtung plattenförmige Teile auf, die über Dämpfungsmaterial, das die Gewichtskraft des zu haltenden Gerätes überträgt, miteinander verbunden sind. Die so aufgebaute Dämpfungsvorrichtung ist einfach herstellbar und trotzdem wirkungsvoll und langlebig. Diese Dämpfungsvorrichtung enthält keine aneinander anliegenden, gegeneinander beweglichen Teile und unterliegt daher keinem Verschleiß. Diese Dämpfungsvorrichtung verhindert oder verringert die Übertragung von Schwingungen vom feststehenden Teil der schwingungsdämpfenden Halterung auf das zu haltende Gerät. Dadurch werden beispielsweise Gebäudeschwingungen absorbiert. Sie wirkt zusätzlich zu den Stoßdämpfungselementen.

Bei einer bevorzugten Ausführungsform der Erfindung sind die plattenförmigen Teile der Dämpfungsvorrichtung im wesentlichen vertikal angeordnet. Dadurch wird das Gewicht des zu haltenden Gerätes über das Dämpfungsmaterial durch Scherkräfte übertragen, die im Dämpfungsmaterial Schubspannungen verursachen. Die Vibrationsdämpfung wird günstig beeinflußt, da ein als Dämpfungsmaterial bevorzugt verwendeter zäh-elastischer Kunststoffschaum durch Vibrationen verursachte Änderungen der Schubspannungen besonders gut absorbiert.

Bei einer Weiterbildung dieser Ausführungsform der erfindungsgemässen schwingungsdämpfenden Halterung sind die plattenförmigen Teile der Dämpfungsvorrichtung konzentrische Hohlprofile, insbesondere Hohlzylinder. Die Hohlprofile müssen nicht notwendigerweise eine einander ähnliche Form haben.

Die Stoßdämpfungselemente funktionieren im allgemeinen pneumatisch mit einem Gas (z. B. Luft, Stickstoff, Kohlendioxid) als Dämpfungsmedium. Sie weisen Anschlußstutzen zum Zuführen und Ablassen des Gases auf und ermöglichen dadurch, das zu haltende Gerät anzuheben, um beispielsweise ein vorhandenes Stativ entfernen zu können.

Diese und andere Aufgaben und Vorteile der Erfindung werden aus der folgenden detaillierten Beschreibung im Zusammenhang mit den Zeichnungen deutlich. Die den Zeichnungen, der Beschreibung und den Ansprüchen entnehmbaren Merkmale können je einzeln für sich oder zu mehreren in beliebiger Kombination bei einer Ausführungsform der Erfindung verwirklicht sein.
- Fig. 1: zeigt die Ansicht einer Ausführungsform der erfindungsgemäßen schwingungsdämpfenden Halterung;
- Fig. 2: zeigt einen Schnitt durch die Dämpfungsvorrichtung der erfindungsgemäßen schwingungsdämpfenden Halterung;
- Fig. 3: zeigt die Ansicht einer Ausführungsform der erfindungsgemäßen schwingungsdämpfenden Halterung, deren tragende Struktur eine Drahtseilkonstruktion aufweist;
- Fig. 4: zeigt die Draufsicht der schwingungsdämpfenden Halterung gemäß Figur 3;
- Fig. 5: zeigt die Ansicht einer weiteren Ausführungsform der erfindungsgemäßen schwingungsdämpfenden Halterung;
- Fig. 6: zeigt die Draufsicht der schwingungsdämpfenden Halterung gemäß Figur 5;
- Fig. 7: zeigt die Ansicht einer anderen Ausführungsform der erfindungsgemäßen schwingungsdämpfenden Halterung;
- Fig. 8: zeigt die Draufsicht der schwingungsdämpfenden Halterung gemäß Figur 7;
- Fig. 9: zeigt die Ansicht einer Ausführungsform der erfindungsgemäßen schwingungsdämpfenden Halterung, deren tragende Struktur ein räumliches Gitterwerk aufweist;
- Fig. 10: zeigt die Draufsicht der schwingungsdämpfenden Halterung gemäß Figur 9.

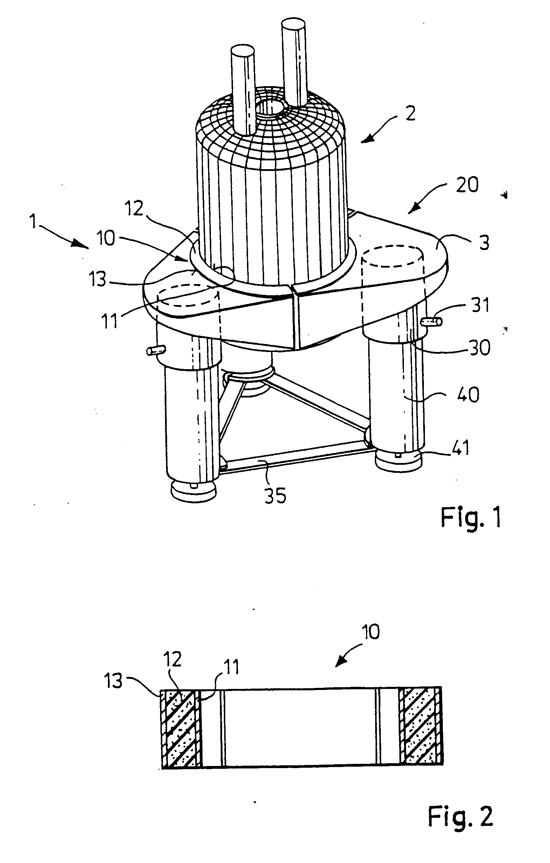

Die in Fig. 1 dargestellte Ausführungsform der erfindungsgemässen schwingungsdämpfenden Halterung 1 hält einen Kryostaten 2 eines supraleitenden Magnetsystems eines NMR-Spektrometers. Diese schwingungsdämpfende Halterung 1 weist eine Dämpfungsvorrichtung 10, eine tragende Struktur 20, Stoßdämpfungselemente 30 und Höhenadapter 40 auf.

Die in Fig. 2 gezeigte Dämpfungsvorrichtung 10 besteht aus einem inneren Hohlzylinder 11 (innerer Zylinder) und einem dazu konzentrischen äußeren Hohlzylinder 13 (äußerer Zylinder), die beide aus Aluminium, Stahl oder Verbundwerkstoff hergestellt sein können. Da sich die Dämpfungsvorrichtung 10 im Streufeld des supraleitenden Magnetsystems des NMR-Spektrometers befindet, ist bei Herstellung der Hohlzylinder 13 aus Stahl antimagnetischer CrNi-Stahl zu verwenden. Zwischen diesen beiden Zylindern befindet sich ein zäh-elastischer Kunststoffschaum als Dämpfungsmaterial 12. Der innere Zylinder 11 der Dämpfungsvorrichtung umspannt den Kryostaten 2.

Die Mittelachse der zylindrischen Dämpfungsvorrichtung 10 verläuft senkrecht. Dadurch wird die Gewichtskraft des Kryostaten 2 über das Dämpfungsmaterial 12 mittels Scherkräften auf die tragende Struktur 20 übertragen. Die Scherkräfte bewirken im Dämpfungsmaterial 12 Schubspannungen. Da das Dämpfungsmaterial 12 durch Vibrationen verursachte Änderungen der Schubspannungen besonders gut absorbiert, wird die Dämpfungswirkung des Dämpfungsmaterials optimal genutzt.

Das Dämpfungsmaterial 12 ist mit dem inneren und dem äußeren Zylinder 11, 13 verklebt. Die beiden konzentrischen Zylinder 11, 13 berühren einander nicht.

Die tragende Struktur 20 der dargestellten Ausführungsform der erfindungsgemässen schwingungsdämpfenden Halterung 1 ist eine Schweißkonstruktion aus plattenförmigen Teilen aus Aluminium oder antimagnetischem CrNi-Stahl. In ihrem Zentrum ist eine zylinderförmige Öffnung zur Aufnahme der Dämpfungsvorrichtung 10. Der äußere Zylinder 13 der Dämpfungsvorrichtung 10 ist mit der tragenden Struktur 20 verklebt. Die Dämpfungsvorrichtung 10 und die tragende Struktur 20 sind radial zur Zylinderachse in drei Segmente 3 geteilt. Diese Segmente 3 umfassen außer der Dämpfungsvorrichtung 10 und der tragenden Struktur 20 je ein Stoßdämpfungselement 30 und einen Höhenadapter 40. Die Segmente 3 sind miteinander verschraubt.

Das Dämpfungsmedium der Stoßdämpfungselemente 30 ist Druckluft, Stickstoff oder Kohlendioxid. Diese Stoßdämpfungselemente 30 dienen zusätzlich zur Dämpfungsvorrichtung 10 zur Vibrationsdämpfung.

Am unteren Ende der Stoßdämpfungselemente 30 sind Höhenadapter 40 angebracht. Diese Höhenadapter 40 haben Schraubfüsse 41 wodurch eventuelle Unebenheiten der Aufstellfläche ausgeglichen werden können und die gewünschte Höhe über dem Boden genau eingestellt werden kann.

Verbindungsstreben 35 verbinden die Stoßdämpfungselemente 30 bzw. die Höhenadapter 40 miteinander. Durch die Verbindungsstreben 35 ist der Abstand der Stoßdämpfungselemente 30 bzw. der Höhenadapter 40 voneinander festgelegt und ihre parallele Ausrichtung zueinander gewährleistet, auch wenn die tragende Struktur 20 noch nicht montiert ist. Außerdem wird durch die Verbindungsstreben 35 ein in sich stabiler Aufbau der schwingungsdämpfenden Halterung 1 erreicht.

Bei der Aufstellung und Montage der beschriebenen schwingungsdämpfenden Halterung 1 werden die Höhenadapter 40 in Dreiecksform um den zu haltenden Kryostaten angeordnet. Mittels der Schraubfüsse 41 wird die Höhe der Höhenadapter 40 eingestellt. Anschließend werden die Höhenadapter 40 durch die Verbindungsstreben 35 miteinander verbunden. Die Stoßdämpfungselemente 30 werden auf den Höhenadaptern 40 angebracht und an eine nicht dargestellte Druckluftversorgung und ein ebenfalls nicht dargestelltes Höhenregelsystem angeschlossen. Die Dämpfungsvorrichtung 10 und die tragende Struktur 20 werden auf den Stoßdämpfungselementen 30 angebracht und am Kryostaten 2 befestigt. Falls erforderlich kann der Kryostat 2 jetzt durch Zufuhr von Druckluft durch Anschlußstutzen 31 in die Stoßdämpfungselemente 30 angehoben werden. Ein vorhandenes Stativ kann entfernt und der Kryostat 2 anschließend wieder abgesenkt werden. Das nicht dargestellte Regelsystem gewährleistet, daß das Anheben und Absenken gleichmäßig erfolgt und der Kryostat 2 nach dem Absenken exakt wieder seine ursprüngliche Lage einnimmt.

Da herkömmliche Stative im allgemeinen nicht über den Durchmesser eines zu haltenden Kryostaten 2 vorstehen, behindert ein solches Stativ die Aufstellung und Montage der erfindungsgemäßen schwingungsdämpfenden Halterung 1 nicht. Der Kryostat 2 kann zusammen mit einem vorhandenen Stativ von der schwingungsdämpfenden Halterung 1 angehoben, das Stativ abgeschraubt und entfernt und der Kryostat 2 wieder in seine ursprüngliche Lage abgesenkt werden.

Das Gewicht des Kryostaten 2 beträgt beispielsweise etwa zwischen 0,3 t und 1,3 t, seine Höhe zwischen etwa 1,2 m und 2 m (ohne Entlüftungsstutzen) und sein Durchmesser etwa 1 m bis 1,5 m.

Das Dämpfungsmaterial 12 der Dämpfungsvorrichtung 10 des beschriebenen Ausführungsbeispiels ist AIREX R 63.80 der Firma Airex. Dies ist ein zäh-elastischer geschlossenporiger Kunststoffschaum aus linear vernetztem PVC.

Für die tragende Struktur 20 sind verschiedene Ausführungsformen möglich, von denen einige im folgenden beschrieben werden. Sie kann so konstruiert sein, daß sich der Schwerpunkt des Kryostaten 2 etwa in Höhe der Stoßdämpfungselemente 30 befindet.

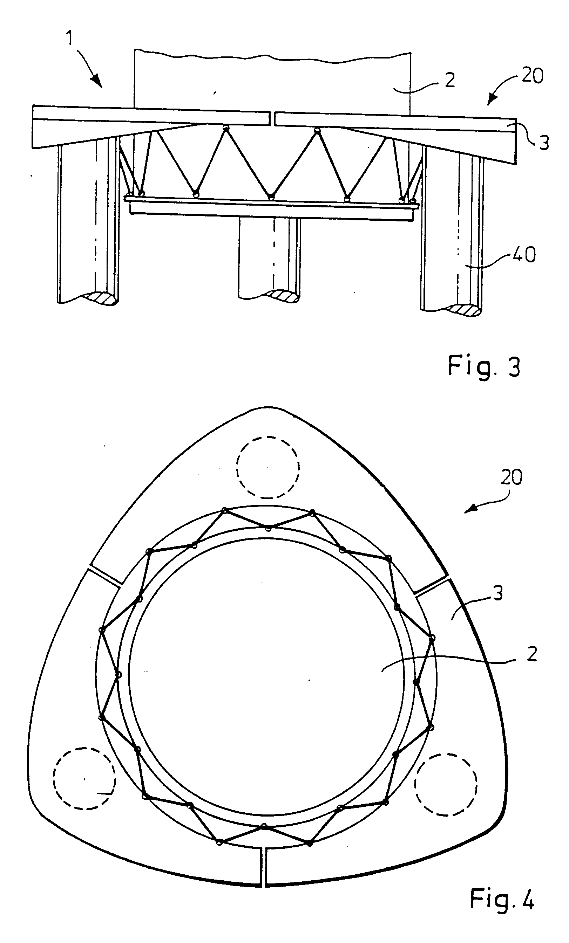

Die Figuren 3 und 4 zeigen eine tragende Struktur 20, deren Segmente 3 einen Rahmen bilden. An diesem Rahmen sind Drahtseile befestigt, an denen eine Tragplatte hängt, auf welcher der Kryostat 2 steht. Um Pendeln des Kryostaten zu verhindern, ist bei dieser Konstruktion darauf zu achten, daß die Drahtseile dreiecksförmig angeordnet sind und eine genügend große Neigung in radialer Richtung aufweisen. Hauptvorteil dieser Ausführungsform sind die geringen Herstellungskosten. Ein weiterer Vorteil ist die zusätzliche Schwingungsdämpfung der Drahtseile.

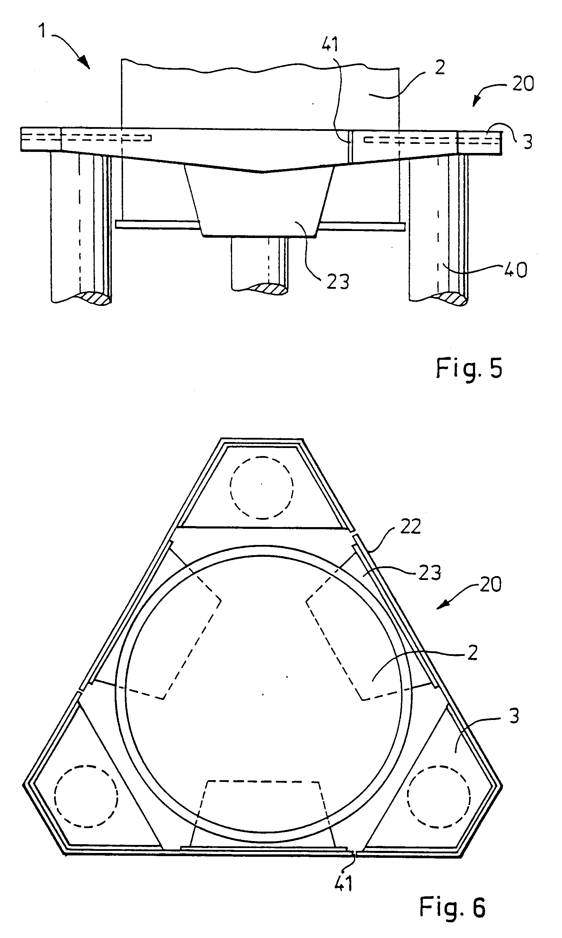

Die Figuren 5 und 6 zeigen eine tragende Struktur 20, deren Segmente 3 einen in der Draufsicht im wesentlichen dreieckigen Rahmen bilden, an dem Winkelelemente 23 befestigt sind. Die Winkelelemente 23 sind jeweils in der Mitte der Rahmenseiten befestigt. Sie ragen nach unten aus der Rahmen-ebene heraus und sind unten nach innen (zur Mitte) abgewinkelt. Auf diesen Winkelelementen 23 steht der Kryostat 2. Die Winkelelemente 23 berühren einander nicht. Die den Rahmen bildenden Segmente 3 sind seitlich neben den Winkelelementen 23 teilbar, an jedem Segment 3 ist ein Winkelelement 23 befestigt. Ein Segment 3 weist zwei an das obere Ende eines Stoßdämpfungselementes 30 bzw. Höhenadapters 40 angrenzende, ungleich lange Arme auf, so daß die Fuge 41 zwischen zwei benachbarten Segmenten 3 außermittig in der Nähe des Punktes liegt, an dem sich das Segment 3 auf dem Stoßdämpfungselement 30 bzw. dem Höhenadapter 40 abstützt. Vorteil dieser Ausführungsform der Erfindung ist, daß die Fugen, an denen die schwingungsdämpfende Halterung 1 teilbar ist, kurz und daher die schwingungsdämpfende Halterung 1 einfach zu fertigen ist und leicht zusammengebaut werden kann.

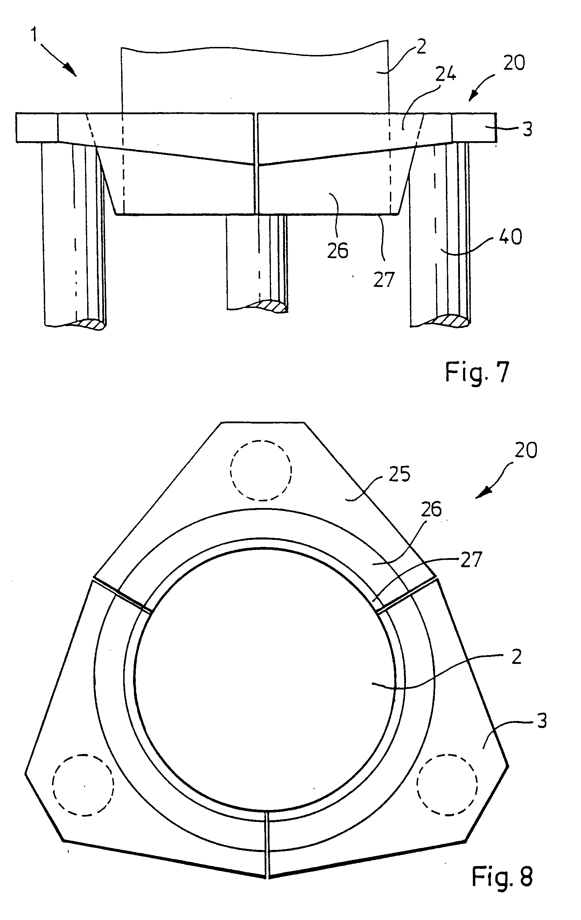

Wie die Figuren 7 und 8 zeigen, kann die tragende Struktur 20 die Form einer Wanne mit einer konischen oder zylindrischen Umfangswand 26 und einem Boden 27 aufweisen. Der Kryostat 2 steht auf dem Boden 27. Der obere Rand 25 der tragenden Struktur 20 steht zumindest stellenweise horizontal nach außen (von der Mitte weg) über die Umfangswand 26 über. An diesem überstehenden Rand sind die Stoßdämpfungselemente 30 bzw. die Höhenadapter 40 befestigt. Die Teilfugen dieser Ausführungsform der Erfindung verlaufen jeweils zwischen zwei Stoßdämpfungselementen 30 bzw. Höhenadaptern 40 durch den Rand 25, die Umfangswand 26 und den Boden 27 bis zu dessen Mitte, wo die drei Teilfugen zusammenlaufen. Die Teilfugen müssen nicht notwendigerweise (wie gezeichnet) in der Mitte zwischen den Stoßdämpfungselementen 30 bzw. den Höhenadaptern 40 angeordnet sein. Jedes Segment 3 dieser Ausführungsform der Erfindung umfaßt einen 120°-Abschnitt des Randes 25, der Umfangswand 26 und des Bodens 27 sowie ein Stoßdämpfungselement 30 und einen Höhenadapter 40. Diese Ausführungsform der tragenden Struktur 20 läßt sich als Schweißkonstruktion aus entsprechend zugeschnittenen und gebogenen Aluminiumblechen oder Blechen aus CrNi-Stahl fertigen.

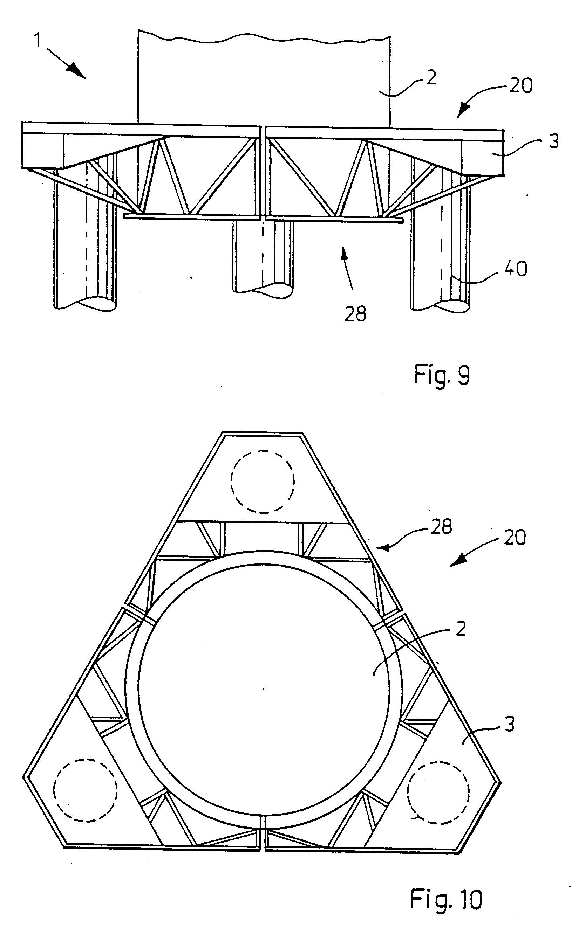

Bei einer weiteren Ausführungsform der tragenden Struktur 20 nach den Figuren 9 und 10 weist diese ein Gitterwerk 28 auf. Dieses Gitterwerk 28 besteht aus Stäben, die räumlich so zueinander angeordnet sind, daß Belastungen des Gitterwerks 28 in beliebigen Richtungen die Stäbe des Gitterwerks 28 in deren Längsrichtung beanspruchen. Die Stäbe werden also auf Zug oder Druck belastet, eine Biegebeanspruchung dieser Stäbe wird vermieden. Diese Ausführungsform der tragenden Struktur 20 ist extrem steif, wodurch Schwingungen in der tragenden Struktur 20 selbst zuverlässig vermieden werden.

Die beschriebene schwingungsdämpfende Halterung ist in der Lage, feinste Schwingungen, z. B. Gebäudeschwingungen zu absorbieren.

## Patentansprüche

1. Schwingungsdämpfende Halterung zum Halten vibrationsempfindlicher Geräte mit einer Dämpfungsvorrichtung (10), einer tragenden Struktur (20), Stoßdämpfungselementen (30) und Höhenadaptern (40), dadurch gekennzeichnet, daß die schwingungsdämpfende Halterung (1) in mehrere, im wesentlichen gleich aufgebaute Segmente (3) teilbar ist, wobei jedes Segment (3) einen Abschnitt der Dämpfungsvorrichtung (10), der tragenden Struktur (20), mindestens ein Stoßdämpfungselement (30) und einen Höhenadapter (40) umfaßt.

2. Schwingungsdämpfende Halterung nach Anspruch 1, dadurch gekennzeichnet, daß die schwingungsdämpfende Halterung (1) drei Segmente (3) aufweist.

3. Schwingungsdämpfende Halterung nach Anspruch 1, dadurch gekennzeichnet, daß die Dämpfungsvorrichtung (10) plattenförmige Teile aufweist, die über Dämpfungsmaterial (12), das die Gewichtskraft des zu haltenden Gerätes (2) überträgt, miteinander verbunden sind.

4. Schwingungsdämpfende Halterung nach Anspruch 3, dadurch gekennzeichnet, daß die plattenförmigen Teile im wesentlichen vertikal angeordnet sind.

5. Schwingungsdämpfende Halterung nach einem der Ansprüche 3 oder 4, dadurch gekennzeichnet, daß die plattenförmigen Teile konzentrische Hohlprofile sind.

6. Schwingungsdämpfende Halterung nach Anspruch 5, dadurch gekennzeichnet, daß die Hohlprofile Hohlzylinder (11, 13) sind.

7. Schwingungsdämpfende Halterung nach einem der vorhergehenden Ansprüche, dadurch gekennzeichnet, daß das Dämpfungsmedium der Stoßdämpfungselemente (30) ein Gas ist.

8. Schwingungsdämpfende Halterung nach Anspruch 7, dadurch gekennzeichnet, daß die Stoßdämpfungselemente (30) Anschlußstutzen (31) zum Zuführen und Ablassen des Gases aufweisen.

9. Schwingungsdämpfende Halterung nach einem der vorhergehenden Ansprüche, dadurch gekennzeichnet, daß die Dämpfungsvorrichtung Drahtseile aufweist, über die das zu haltende Gerät (2) an der tragenden Struktur (20) der schwingungsdämpfenden Halterung (1) aufgehängt ist.

10. Schwingungsdämpfende Halterung nach einem der Ansprüche 1 bis 8, dadurch gekennzeichnet, daß die Segmente (3) einen in der Draufsicht in vertikaler Richtung im wesentlichen dreieckigen Rahmen bilden, an dem aus der Rahmenebene vertikal nach unten herausragende und nach innen zur Rahmenmitte hin abgewinkelte Winkelelemente (23) befestigt sind.

11. Schwingungsdämpfende Halterung nach einem der Ansprüche 1 bis 8, dadurch gekennzeichnet, daß die tragende Struktur (20) einen Boden (27), eine konische oder zylindrische Umfangswand (26), die sich vom Boden (27) nach oben erstreckt und einen oberen Rand (25), der zumindest stellenweise horizontal nach außen über die Umfangswand (26) übersteht und an dem die Stoßdämpfungselemente (30) bzw. die Höhenadapter (40) befestigt sind, aufweist.

12. Schwingungsdämpfende Halterung nach einem der Ansprüche 1 bis 8, dadurch gekennzeichnet, daß die tragende Struktur (20) ein räumliches Gitterwerk (28) aufweist.

13. Anordnung eines vibrationsempfindlichen Gerätes (2) mit einer schwingungsdämpfenden Halterung nach einem der vorhergehenden Ansprüche, wobei sich der Schwerpunkt des zu haltenden Gerätes (2) etwa in Höhe der Stoßdämpfungselemente (30) befindet.

## Claims

1. Vibration-damping mount for holding vibration-sensitive equipment, with a damping device (10), a supporting structure (20), shock absorption elements (30), and height adapters (40), characterized in that the vibration-damping mount (1) can be divided into a plurality of segments (3) of essentially the same structure, with each segment (3) comprising a section of the damping device (10), the supporting structure (20), at least one shock absorption element (30), and a height adapter (40).

2. Vibration-damping mount according to Claim 1, characterized in that the vibration-damping mount (1) has three segments (3).

3. Vibration-damping mount according to Claim 1, characterized in that the damping device (10) has plate-like parts that are joined to one another by damping material (12) that transfers the weight of the unit (2) being held.

4. Vibration-damping mount according to Claim 3, characterized in that the plate-like parts are arranged essentially vertically.

5. Vibration-damping mount according to one of Claims 3 or 4, characterized in that the plate-like parts are concentric hollow profiled sections.

6. Vibration-damping mount according to Claim 5, characterized in that the hollow profiled sections are hollow cylinders (11, 13).

7. Vibration-damping mount according to one of the preceding Claims, characterized in that the damping medium of the shock absorption elements (30) is a gas.

8. Vibration-damping mount according to Claim 7, characterized in that the shock absorption elements (30) have connectors (31) for delivering and releasing the gas.

9. Vibration-damping mount according to one of the preceding Claims, characterized in that the damping device has wire cables by means of which the unit (2) being held is suspended from the supporting structure (20) of the vibration-damping mount (1).

10. Vibration-damping mount according to one of Claims 1 to 8, characterized in that the segments (3) form a frame, that is essentially triangular when seen from above in the vertical direction, to which angle elements (23), which project vertically downward out of the plane of the frame and are bent inward towards the center of the frame, are fastened.

11. Vibration-damping mount according to one of Claims 1 to 8, characterized in that the supporting structure (20) has a floor (27), a conical or cylindrical peripheral wall (26) that extends upward from the floor (27), and an upper rim (25) which projects, in at least some places, horizontally outward above the peripheral wall (26) and to which the shock absorption elements (30) or height adapters (40) are fastened.

12. Vibration-damping mount according to one of Claims 1 to 8, characterized in that the supporting structure (20) has a three-dimensional lattice (28).

13. An arrangement of a vibration-damping unit (2) with a vibration-damping mount according to one of the preceding Claims, wherein the center of gravity of the unit (2) being held is located approximately at the height of the shock absorption elements (30).

## Revendications

1. Support amortissant les vibrations destiné à supporter des appareils sensibles aux vibrations, avec un dispositif amortisseur (10), une structure porteuse (20), des éléments (30) amortissant les chocs et des adaptateurs en hauteur (40), **caractérisé** en ce que le support (1) amortissant les vibrations peut être divisé en plusieurs segments (3) de structure sensiblement identique, chaque segment (3) comprenant une partie du dispositif amortisseur (10), une partie de la structure porteuse (30), au moins un élément (30) amortissant les chocs et au moins un adaptateur en hauteur (40).

2. Support amortissant les vibrations selon la revendication 1, **caractérisé** en ce que le support (1) amortissant les vibrations présente trois segments (3).

3. Support amortissant les vibrations selon la revendication 1, **caractérisé** en ce que le dispositif amortisseur (10) présente des parties en forme de plaques, qui sont mutuellement assemblées par du matériau d'amortissement (12) qui transmet le poids de l'appareil (2) à supporter.

4. Support amortissant les vibrations selon la revendication 3, **caractérisé** en ce que les parties en forme de plaques sont disposées sensiblement verticalement.

5. Support amortissant les vibrations selon la revendication 3 ou 4, **caractérisé** en ce que les parties en forme de plaques sont des profilés creux concentriques.

6. Support amortissant les vibrations selon la revendication 5, **caractérisé** en ce que les profilés creux sont des cylindres creux (11, 13).

7. Support amortissant les vibrations selon l'une quelconque des revendications précédentes, **caractérisé** en ce que le fluide d'amortissement des éléments (30) amortissant les chocs est un gaz.

8. Support amortissant les vibrations selon la revendication 7, **caractérisé** en ce que les éléments (30) amortissant les chocs présentent des tubulures de raccordement (31) pour l'alimentation et l'évacuation du gaz.

9. Support amortissant les vibrations selon l'une quelconque des revendications précédentes, **caractérisé** en ce que le dispositif amortisseur présente des câbles métalliques par l'intermédiaire desquels l'appareil (2) à supporter est accroché à la structure porteuse (20) du support (1) amortissant les vibrations.

10. Support amortissant les vibrations selon l'une quelconque des revendications 1 à 8, **caractérisé** en ce que les segments (3) forment un cadre sensiblement triangulaire en vue de dessus en direction verticale, auquel sont fixés des éléments coudés (23) qui dépassent verticalement vers le bas hors du plan du cadre et qui sont coudés vers l'intérieur, en direction du milieu du cadre.

11. Support amortissant les vibrations selon l'une quelconque des revendications 1 à 8, **caractérisé** en ce que la structure porteuse (20) présente un fond (27), une paroi périphérique (26) conique ou cylindrique, qui s'étend vers le haut à partir du fond (27), et un bord supérieur (25), qui dépasse de la paroi périphérique (26) horizontalement vers l'extérieur au moins par endroits et auquel sont fixés les éléments (30) amortissant les chocs ou encore les adaptateurs en hauteur (40).

12. Support amortissant les vibrations selon l'une quelconque des revendications 1 à 8, **caractérisé** en ce que la structure porteuse (20) présente une ossature en treillis (28) à trois dimensions.

13. Agencement d'un appareil (2) sensible aux vibrations et d'un support amortissant les vibrations selon l'une quelconque des revendications précédentes, le centre de gravité de l'appareil (2) à supporter se trouvant approximativement à hauteur des éléments (30) amortissant les chocs.
